# EUROPÄISCHE PATENTSCHRIFT

(11) **EP 2 030 855 B1**
(45) Veröffentlichungstag und Bekanntmachung des Hinweises auf die Patenterteilung: **02.03.2011**
(21) Anmeldenummer: 08075736.2
(22) Anmeldetag: 28.08.2008
(51) Int. Cl.: B60T 17/22

(54) **Schienenfahrzeug und Verfahren zum Prüfen der Wirksamkeit einer mechanischen Bremse des Schienenfahrzeugs**
Rail vehicle and method for testing the efficiency of a mechanical brake of same
Véhicule sur rail et procédé de vérification de l'efficacité d'un frein mécanique du véhicule sur rail

(30) Priorität: 30.08.2007 DE 102007041235
(43) Veröffentlichungstag der Anmeldung: 04.03.2009
(73) Patentinhaber: Bombardier Transportation GmbH, 10785 Berlin (DE)
(72) Erfinder: Brügger, Roland, 5417 Untersiggenthal (CH)
(74) Vertreter: Patentanwälte Bressel und Partner

(56) Entgegenhaltungen:
- EP-A1- 1 506 900
- DE-A1- 19 755 112
- JP-A- 3 118 439

## Beschreibung

Die Erfindung betrifft ein Verfahren zum Prüfen der Wirksamkeit einer mechanischen Bremse eines Schienenfahrzeugs, insbesondere eines leichten Schienenfahrzeugs wie z.B. einer Straßenbahn. Die Erfindung betrifft ferner ein Schienenfahrzeug, insbesondere ein leichtes Schienenfahrzeug.

Bei Schienenfahrzeugen ist die Wirksamkeit der mechanischen Bremse oder der mechanischen Bremsen häufig zu überprüfen. Die Wirksamkeit der mechanischen Bremse ist eine Funktion des Bremsdrucks (des hydraulischen oder pneumatischen Systems), der Einstellungen (z.B. Belagsspiel) und der Abnutzung der Bremsbeläge. Es ist üblich, die vorgeschriebene Prüfung insbesondere der Bremsbeläge durch eine Sichtprüfung durchzuführen. Hierzu wird das Fahrzeug über eine Inspektionsgrube gefahren, so dass ein Mechaniker oder der Fahrer die Bremsbeläge betrachten kann.

EP 1506900 A1 beschreibt eine konventionelle Schienenfahrzeug bremstestmethode.

Es ist eine Aufgabe der vorliegenden Erfindung, ein einfaches Verfahren zum Prüfen der Wirksamkeit einer mechanischen Bremse eines Schienenfahrzeugs anzugeben. Insbesondere soll der Aufwand für die Prüfung der Wirksamkeit verringert werden. Ferner soll ein entsprechendes Schienenfahrzeug angegeben werden.

Der vorliegenden Erfindung liegt folgender Gedanke zugrunde: In modernen Schienenfahrzeugen, die z.B. von Drei-Phasen-Wechselstrommotoren angetrieben werden, kann die Antriebszugkraft bzw. die Bremskraft der Motoren aus elektrischen Größen genau berechnet werden. Die so berechnete Zugkraft soll daher zur Ermittlung der Wirksamkeit der mechanischen Bremse oder der mechanischen Bremsen genutzt werden.

Ferner ist es bekannt, dass Schienenfahrzeuge eine Geschwindigkeitsregelung aufweisen, die in der Lage ist, eine vorgegebene Geschwindigkeit (darunter wird hier der Geschwindigkeitsbetrag verstanden) des Schienenfahrzeugs zu erzielen und genau beizubehalten. Eine Phase, in der die Geschwindigkeit konstant gehalten wird, kann als stationäre Phase bzw. als stationärer Zustand oder Beharrungszustand der Geschwindigkeitsregelung bezeichnet werden. Z.B. stellt der Fahrer des Schienenfahrzeugs einen bestimmten Geschwindigkeitswert am Führerstand als Sollwert ein. Die Geschwindigkeitsregelung erhöht oder erniedrigt daraufhin die Geschwindigkeit mittels Änderung der Zug- oder Bremskraft, bis der Sollwert erreicht ist. Danach steuert die Geschwindigkeitsregelung die Fahrmotoren so an, dass ein eventuell vorhandener Fahrwiderstand ausgeglichen wird oder eine z.B. im Gefälle oder Steigung auftretende Geschwindigkeit mittels Zugkraftänderung ausgeglichen wird. Im stationären Betrieb der Geschwindigkeitsregelung kann daher über die Fahrmotoren eine andere erzeugte Zug- oder Bremskraft erforderlich sein. Sowohl die Zugkraft als auch die Bremskraft kann, wie erwähnt, elektrisch gemessen und berechnet werden. Auch bei älteren Schienenfahrzeugen, die z.B. über Gleichstrommotoren angetrieben werden, kann die Antriebszugkraft ermittelt werden, z.B. aus dem Motorstrom und Erregerstrom und Geschwindigkeit. Z. B. wird von einer Steuerung des Schienenfahrzeug-Antriebsmotors das Drehmoment (so genanntes Luftspaltmoment) berechnet. Dazu wird das Produkt aus Statorfluss mal Statorstrom gebildet. Der Statorfluss ist gleich der Grundwellenspannung dividiert durch die Grundwellenfrequenz f1: 4 / Pi * Ud * A / 2 * Pi * f1. Dabei sind Ud die Gleichspannung auf einer Gleichspannungsseite eines Wechselrichters, der den Antriebsmotor mit Wechselstrom speist, und A die Aussteuerung des Wechselrichters. Z. B. von einer Software der Steuerung wird der Statorfluss in einem Rechenmodell des Motors durch Integration der geschalteten Spannung gebildet, insbesondere durch Multiplikation der Spannung mit der Zeit. Da die Gleichspannung (in der Regel die Zwischenkreisspannung eines Gleichspannungs-Zwischenkreises auf der Gleichspannungsseite des Wechselrichters) genau bekannt ist, kann der Statorfluss mit hoher Genauigkeit berechnet werden, außer während das Schienenfahrzeug anfährt. Der Statorstrom wird mit Stromsensoren gemessen und ist in der Regel mit einer Genauigkeit von 1 % bekannt. Daraus folgt, dass das Drehmoment und damit die Zugkraft mit einem relativen Fehler von wenigen Prozent berechnet werden kann.

Die Bremskraft bei nicht betätigter mechanischer Bremse kann z.B. durch Messung der Verzögerung des Schienenfahrzeugs ebenfalls berechnet werden. Hier gilt, dass die Bremskraft gleich der verzögerten Masse mal der Verzögerung ist. Die Bremsenergie ergibt sich durch Multiplikation mit dem Bremsweg, wobei gegebenenfalls bei sich mit der Zeit verändernder Verzögerung das Zeitintegral über den Verzögerungsvorgang zu berechnen ist.

Die Bremsleistung wird aus der Bremsenergie dividiert durch die Verzögerungszeit berechnet.

Insbesondere wird Folgendes vorgeschlagen:
Verfahren zum Prüfen der Wirksamkeit einer mechanischen Bremse eines Schienenfahrzeugs, wobei die mechanische Bremse während einer Fahrt des Schienenfahrzeugs mit konstanter Geschwindigkeit betätigt wird, so dass eine automatische Geschwindigkeitsregelung des Schienenfahrzeugs die Bremskraft der mechanischen Bremse durch eine erhöhte Antriebskraft ausgleicht, um die Geschwindigkeit weiterhin konstant zu halten, und wobei aus der erhöhten Antriebskraft die Wirksamkeit der mechanischen Bremse ermittelt wird.

Ferner wird ein Schienenfahrzeug vorgeschlagen mit einer automatischen Geschwindigkeitsregelung und mit einer Prüfeinrichtung zum Prüfen der Wirksamkeit einer mechanischen Bremse des Schienenfahrzeugs, wobei die Prüfeinrichtung ausgestaltet ist, während einer Fahrt des Schienenfahrzeugs mit konstanter Geschwindigkeit, wenn die mechanische Bremse betätigt wird, eine von der automatischen Geschwindigkeitsregelung des Schienenfahrzeugs bewirkte erhöhte Antriebskraft festzustellen und aus der erhöhten Antriebskraft die Wirksamkeit der mechanischen Bremse zu ermitteln. Die zusätzlich benötige Zugkraft, die der Geschwindigkeitsregler einstellt, entspricht der Wirkung der zu testenden mechanischen Bremse.

Wenn in dieser Beschreibung von der Bremskraft der mechanischen Bremse die Rede ist, so schließt dies auch den Fall mit ein, dass z.B. über eine definierte Zeit oder Fahrstrecke die Bremsenergie der mechanischen Bremse ermittelt wird. Auch hieraus kann die Wirksamkeit der mechanischen Bremse ermittelt werden. Entsprechendes gilt für die Antriebsleistung.

Insbesondere wird bei wiederholten Prüfungen der Wirksamkeit der mechanischen Bremse immer eine genau definierte Bremskraft der mechanischen Bremse vorgegeben. Lässt die Wirksamkeit der mechanischen Bremse nach, wird dieser vorgegebene Bremskraftwert zu nachlassender tatsächlicher Bremsleistung, das heißt nachlassender Bremskraft führen, die durch Auswertung der schwächeren Antriebskraft ermittelt werden kann.

Bevorzugtermaßen wird die Wirksamkeit der mechanischen Bremse bei konstanten niedrigen Geschwindigkeiten, z.B. im Geschwindigkeitsbereich von 3 bis 20 km/h geprüft. Außerdem wird die Wirksamkeit der mechanischen Bremse vorzugsweise in einem Bereich geprüft, in dem sich die Neigung der Teststrecke nicht ändert und sich auch ein Kurvenradius einer eventuell vorhandenen Kurve der Fahrstrecke nicht ändert. Besonders bevorzugt erfolgt die Prüfung in einem geraden Streckenabschnitt.

In bevorzugter Ausgestaltung wird die Prüfung dadurch eingeleitet, dass nach Erreichen des stationären Zustandes der Geschwindigkeitssteuerung, vorzugsweise bei Geradeausfahrt und bei konstanter Neigung der Fahrstrecke, zunächst die für die Erhaltung des stationären Zustandes erforderliche Antriebskraft (oder Antriebsleistung) bzw. elektrische Bremskraft (Bremsleistung oder Bremsenergie) ermittelt wird, indem insbesondere wie oben erwähnt elektrische Messungen durchgeführt werden. Anschließend kann die mechanische Bremse oder können vorzugsweise nacheinander einzeln alle mechanischen Bremsen betätigt werden und kann erneut (vorzugsweise jeweils einzeln für die Bremsen) die Antriebskraft (oder Antriebsleistung oder Antriebsenergie) gemessen werden. Die vor der Betätigung der mechanischen Bremse(n) ermittelte Antriebskraft oder Bremskraft dient dann zur Berechnung der bei Betätigung der mechanischen Bremse(n) aufgebrachten zusätzlichen Antriebskraft (Antriebsleistung).

Bei einer vorteilhaften Ausführungsform wird der Bremstest in einer beliebigen der in dieser Beschreibung beschriebenen Ausführungsform unter gleichen Bedingungen wiederholt. Die Bedingungen betreffen insbesondere die Neigung der Strecke, auf der der Bremstest durchgeführt wird, die Vorgabe einer Soll-Bremswirkung, die Fahrgeschwindigkeit und/oder den Betriebsmodus des Antriebssystems (insbesondere wird unter dem Betriebsmodus verstanden, dass die elektrischen Fahrmotoren des Schienenfahrzeugs in der gleichen Weise betrieben werden). Sind die Bedingungen identisch, kann aus der Wiederholung des Bremstests unmittelbar auf ein Nachlassen der Bremskraft der mechanischen Bremse (n) geschlossen werden, wenn im Vergleich zu einem früheren Bremstest eine geringere Erhöhung der Antriebskraft ausreicht, d.h. die Einstellung derselben Soll-Bremskraft wie bei dem früheren Test nicht zu derselben Bremswirkung führt. Dem liegt der Gedanke zugrunde, dass insbesondere die Reibung bei identischen Bedingungen dieselbe ist. Diese Ausführungsform hat den Vorteil, dass die erhöhte Antriebskraft (oder Antriebsleistung) nicht explizit bestimmt werden muss. Vielmehr reicht es aus, in den verschiedenen Wiederholungen des Tests (zumindest eine Wiederholung) festzustellen, dass gegenüber dem oder den früheren Tests entweder (bei unveränderter Bremsleistung) die gleiche oder (bei verringerter Bremsleistung) eine geringere Antriebskrafterhöhung notwendig war. Dies gelingt bei üblichen Ausgestaltungen des Antriebssystems eines Schienenfahrzeugs mit elektrischen Fahrmotoren und z.B. einer Motorensteuerung, die über die Steuerung von Halbleiterschaltern eines Dreiphasen-Wechselrichters, welcher an seiner Wechselstromseite mit den Fahrmotoren oder dem Fahrmotor verbunden ist, auf einfache Weise, z.B. durch Bestimmung des Motorstroms oder der Summe der Zeitintervalle, in denen die Halbleiterschalter eingeschaltet sind. Die Steuerungselektronik ist dazu in der Lage, dieselben Pulsmuster der Halbleiterventile (d.h. der Halbleiterschalter) in exakt derselben Weise einzustellen. Falls die Gleichspannung auf der Gleichspannungsseite des Wechselrichters bei den verschiedenen Wiederholungen des Bremstests eine andere sein sollte, ist die Steuerungselektronik in der Lage, dies zu berücksichtigen und an der Ausgangsseite des Wechselrichters dennoch dieselbe Antriebskraft bzw. Antriebsleistung zu erzeugen. Derartige Steuerungen können daher auch die Antriebskraft oder -leistung unmittelbar feststellen und anzeigen.

Die Erfindung hat den Vorteil, dass der Fahrer in geeigneten Betriebsphasen, ohne den eigentlichen Fahrbetrieb des Fahrzeugs unterbrechen zu müssen, den Zustand der mechanischen Bremsen prüfen kann. Auch kann die Bremsprüfung während des normalen Fahrbetriebes durchgeführt werden, ohne dass der Fahrzeugführer dabei abgelenkt wird.

Wird z.B. von der Prüfeinrichtung ermittelt, dass die mechanische Bremskraft nicht mehr den Erwartungen entspricht, kann der Fahrer darüber benachrichtigt werden. Alternativ oder zusätzlich kann diese Information auch an die Leitstelle übermittelt werden oder dem im Fahrzeug eingebauten Diagnosesystem übermittelt werden.

Ein Ausführungsbeispiel der vorliegenden Erfindung wird nun unter Bezugnahme auf die beigefügte Zeichnung beschrieben. Die einzelnen Figuren der Zeichnung zeigen:
- Fig. 1: ein Flussdiagramm zur Darstellung von Verfahrensschritten bei der Prüfung von mehreren mechanischen Bremsen,
- Fig. 2: schematisch Einrichtungen eines Schienenfahrzeugs, die bei der erfindungsgemäßen Prüfung der Wirksamkeit einer mechanischen Bremse beteiligt sind, und
- Fig. 3: ein Beispiel für eine Fahrzeugsteuerung.

Moderne existierende Schienenfahrzeuge verfügen über einen Steuerungsrechner zur Steuerung der wesentlichen Fahrzeugfunktionen, insbesondere der Antriebe und der Bremsen des Fahrzeugs. Es ist daher auf einfache Weise möglich, nämlich durch Änderung der Software des Rechners, existierende Schienenfahrzeuge um die erfindungsgemäße Prüffunktion zu erweitern.

Die Erfindung ist jedoch nicht auf eine solche Nachrüstung beschränkt. Auch in anderen Fällen kann ein Rechner in dem Schienenfahrzeug installiert werden und kann die Prüfung der Wirksamkeit der mechanischen Bremse(n) durch Software und/oder Hardware erfolgen.

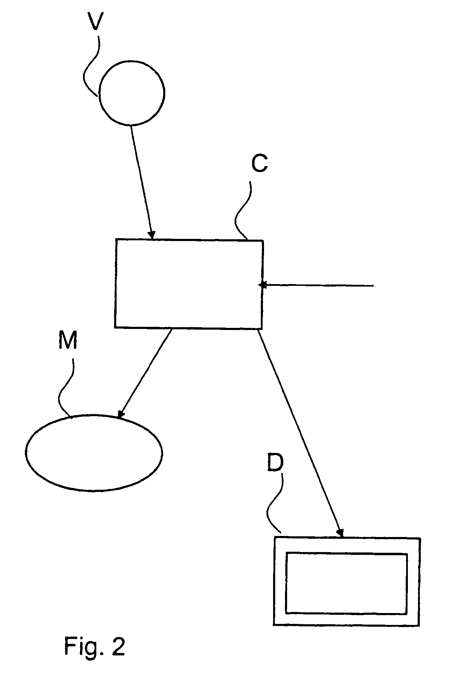

Z.B. können die in Fig. 2 dargestellten Komponenten eines Schienenfahrzeugs an der Prüfung beteiligt sein. V bezeichnet eine Geschwindigkeitsmesseinrichtung, die einen Messwert für die momentane Fahrzeuggeschwindigkeit erzeugt und an eine Steuerung C überträgt. Bei der Steuerung C handelt es sich z.B. um die Antriebssteuerung, in die jedoch auch weitere Funktionen integriert sein können, wie z.B. Überwachungsfunktionen, die für den sicheren und zuverlässigen Betrieb des Fahrzeugs ausgeführt werden.

Wie durch einen schräg nach links unten weisenden Pfeil ausgehend von der Steuerung C angedeutet ist, wird der Fahrmotor M, welcher das Schienenfahrzeug antreibt, von der Steuerung C angesteuert. Dabei ist die Einheit M schematisch zu verstehen und enthält insbesondere einen oder mehrere Fahrmotoren und ein oder mehrere entsprechende elektrische Einrichtungen, wie z.B. Wechselrichter, die den Motorstrom bereitstellen. In der Einheit M kann auch aus der Messung der elektrischen Größen die momentane Antriebskraft oder Antriebsleistung genau berechnet werden.

Die Steuerung C erhält, wie von einem von rechts nach links auf die Steuerung C weisenden Pfeil angedeutet ist, auch einen Sollwert für eine Fahrgeschwindigkeit des Fahrzeugs. Der Sollwert wird durch eine entsprechende Bedienaktion des Fahrzeugführers eingestellt.

Ferner ist die Steuerung C mit einer Anzeigeeinrichtung D verbunden, bei der es sich z.B. um ein Display und/oder um Signalleuchten handeln kann. Wenn der Test (die Prüfung) der mechanischen Bremse oder der mechanischen Bremsen stattgefunden hat, wird vorzugsweise ein Ergebnis der Prüfung auf der Anzeigevorrichtung D dargestellt. Alternativ oder zusätzlich kann jedoch ein Ergebnis der Prüfung auch nur dann dargestellt werden, wenn die Bremswirkung einer oder mehrerer mechanischen Bremsen nicht mehr dem Idealzustand entspricht oder von den zulässigen Werten abweicht.

Vorzugsweise leitet der Fahrzeugführer die Prüfung der mechanischen Bremse(n) ein, indem er einen entsprechenden Befehl dazu gibt. Es ist jedoch auch möglich, dass die Prüfung automatisch bei geeigneten Testbedingungen (z.B. langsame Fahrt mit konstanter Geschwindigkeit in ebenem Gelände bei Geradeausfahrt) durchgeführt wird.

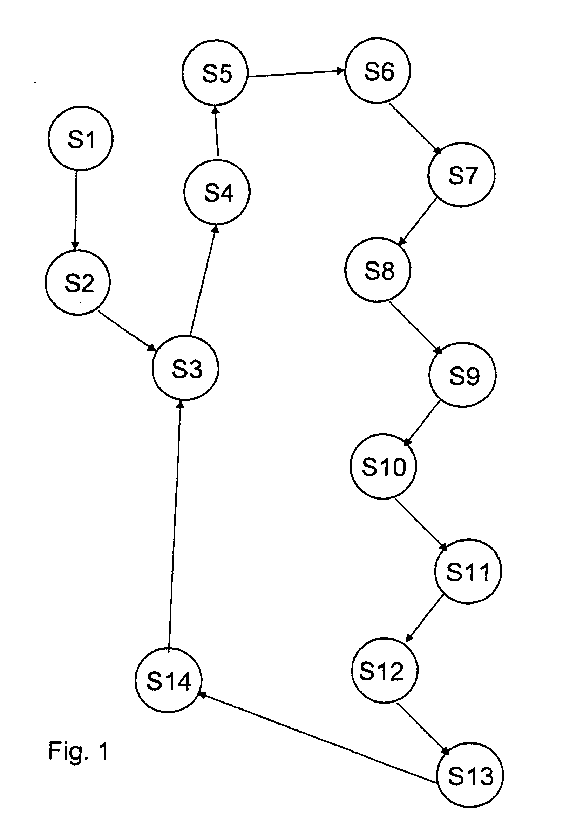

Unter Bezugnahme auf Fig. 1 wird nun ein Verfahrensablauf beschrieben. Das Verfahren wird gesteuert durch eine Software durchgeführt. In Schritt S1 wird der Test initialisiert. Im folgenden Schritt S2 wird ein Bereitschaftszustand erreicht. Dies bedeutet insbesondere, dass die Software Informationen darüber auswertet, ob geeignete Testbedingungen zur Durchführung der Prüfung der mechanischen Bremse(n) vorliegen.

In Schritt S3 liegen nun geeignete Bedingungen für die Durchführung des Tests vor. Insbesondere bewegt sich das Fahrzeug mit konstanter langsamer Geschwindigkeit, z.B. mit 5 km/h, und hat die Strecke eine konstante Neigung, z.B. 1 % Gefälle, 1 % Steigung oder ist in der Ebene. Ferner ist in diesem Zustand die automatische Geschwindigkeitsregelung (die z.B. in der Steuerungseinrichtung C gemäß Fig. 2 integriert ist) aktiv. Die automatische Geschwindigkeitsregelung wird daher eventuell auftretende ändernde Fahrwiderstände durch eine Erhöhung oder Erniedrigung der Antriebskraft ausgleichen. Genau dies wird nach Erreichen des Bereitschaftszustandes, in dem der Test beginnen kann (Schritt S4), und nach dem tatsächlich erfolgten Start des Tests (z.B. durch den Fahrer, Schritt S5) genutzt, um die Bremskraft der mechanischen Bremsen des Fahrzeugs zu ermitteln.

In Schritt S6 wird zunächst die erste der insgesamt (in unserem Beispiel) vier mechanischen Bremsen des Fahrzeugs mit einem reproduzierbaren Sollwert der mechanischen Bremskraft angesteuert. Bei dem Sollwert kann es sich z.B. auch um eine Vorgabe eines bestimmten Bremsdrucks eines pneumatischen oder hydraulischen Bremssystems oder eines Stellwertes einer Stelleinrichtung handeln. Ebenso kann einem der mechanischen Bremseinheiten vorgelagerten Bremsrechner ein mechanischer Bremssollwert vorgegeben werden, den dieser dann versucht umzusetzen. Der Bremsdruck oder mechanische Stellwert wird abhängig von dem Wirkungsgrad der Bremse in verschiedene tatsächliche Bremskräfte umgesetzt. In dem folgenden Schritt S7 wird die Bremskraft der mechanischen Bremse ermittelt. Hierzu wird die Differenz zwischen der tatsächlich während der Betätigung der mechanischen Bremse benötigten Antriebskraft und der vor der Betätigung der mechanischen Bremse benötigten Antriebskraft oder Bremskraft der Fahrmotoren gebildet. Dabei ist die Bremskraft der Fahrmotoren als negativer Wert anzusetzen. Der Geschwindigkeitsregler erhöht also während der Betätigung der mechanischen Bremse die Antriebskraft, um die zusätzliche Bremskraft der mechanischen Bremse zu kompensieren. Diese Erhöhung der Antriebskraft ist also ein Maß für die mechanische Bremswirkung. In Schritt S7 wird das Ergebnis gespeichert und es kann optional auch bereits ermittelt werden, ob die Bremswirkung der ersten mechanischen Bremse den Erwartungen entspricht, nicht entspricht oder inwieweit sie von den Erwartungen abweicht. Diese Auswertung kann aber auch erst in Schritt S14 oder in einem nachfolgenden, nicht dargestellten Schritt erfolgen.

In dem auf Schritt S7 folgenden Schritt S8 wird nun die zweite mechanische Bremse betätigt und die dabei benötigte Antriebskraft gemessen, um die konstante Geschwindigkeit des Fahrzeugs beizubehalten. Die Auswertung des Tests der zweiten mechanischen Bremse erfolgt analog zu Schritt S7 im Schritt S9.

Die Schritte S10 und S11 sowie die Schritte S12 und S13 betreffen in gleicher Weise die dritte mechanische Bremse und die vierte mechanische Bremse des Fahrzeugs.

Bei einer abweichenden, von vier verschiedenen Anzahl von mechanischen Bremsen werden bei einem anderen Schienenfahrzeug diese Bremsen einzeln nacheinander getestet. Es wird also vorzugsweise jeweils nur eine von mehreren mechanischen Bremsen gleichzeitig betätigt, um die Bremswirkung speziell der einzelnen Bremsen ermitteln zu können.

In dem auf Schritt S13 folgenden Schritt S14 werden die in den Test der mechanischen Bremsen ermittelten Daten gesichert, z.B. in einem Datenspeicher gespeichert. Dies ermöglicht insbesondere später eine Auswertung der Historie verschiedener, in Zeitabständen zueinander ausgeführter Tests. In Schritt S14 kann auch die Auswertung der Bremswirkung der mechanischen Bremsen auf Basis der gemessenen Antriebsleistungen während der Betätigung der Bremsen erfolgen.

Auf Schritt S14 folgt z.B. wieder Schritt S3, wenn die Bedingungen für das Durchführen des Tests erneut geprüft werden müssen. Es kann aber auch auf Schritt S14 Schritt S2 folgen, wenn die Bedingungen nicht mehr vorliegen, z.B. keine konstante Geschwindigkeit mehr gefahren werden kann oder wird. Bei Vorliegen der Testbedingungen kann auf Schritt S14 auch Schritt S4 folgen, so dass das System wieder bereit ist für den Start des Tests durch Schritt S5.

Der Test kann aber auch jederzeit abgebrochen werden und das Schienenfahrzeug geht sofort in den Normalzustand über.

Insbesondere wird während der Betätigung einer der mechanischen Bremsen der Soll-Bremswert zeitlich konstant gehalten. Dies erleichtert die Auswertung.

Bei der Ermittlung der Bremswirkung der mechanischen Bremse kann insbesondere davon ausgegangen werden, dass die zusätzliche Antriebskraft während der Betätigung der mechanischen Bremse der Wirksamkeit der mechanischen Bremse proportional ist. Dies erlaubt es z.B., einen Grenzwert für die zusätzliche Antriebskraft festzulegen, der bei Vorgabe eines bestimmten, festgelegten Soll-Bremswertes überschritten werden muss. Wird der Grenzwert nicht überschritten, kann eine entsprechende Meldung generiert werden, z.B. auf der Anzeigevorrichtung D gemäß Fig. 2 dargestellt werden. Die Bremswirkung ist in diesem Fall zu klein.

Vorzugsweise kann der Test der mechanischen Bremse(n) jederzeit durch den Fahrer abgebrochen werden, z.B. wenn die Fahrsituation dies erfordert.

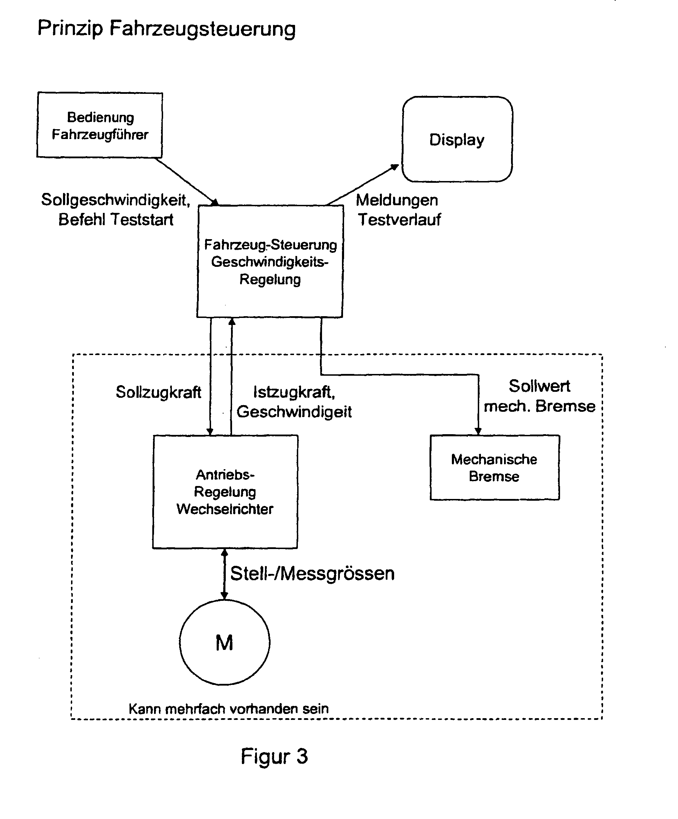

Der Ablauf des Testverfahrens ist in einer Variante auch aus Figur 3 ersichtlich. Wie aus dem Block oben links in der Figur 3 ersichtlich ist, gibt der Fahrzeugführer z. B. den Befehl, den Test zu starten, wobei er auch vorzugsweise die Soll-Geschwindigkeit (konstante Fahrzeuggeschwindigkeit während des Tests) vorgeben kann, bei der der Test durchgeführt werden soll. Die Fahrzeug-Steuerung, die auch eine Einrichtung zur Regelung der Geschwindigkeit auf einen konstanten Wert enthält, erhält den Befehl zum Start des Tests. Sie gibt nun zur Durchführung des Tests und insbesondere zur Erreichung und/oder Beibehaltung der Fahrzeuggeschwindigkeit eine Soll-Zugkraft vor, die in dem Ausführungsbeispiel an die Antriebsregelung eines Antriebsmotors M übermittelt wird. Die Antriebsregelung ist in dem Ausführungsbeispiel eine Regelung eines 3-Phasen-Wechselrichters zum Ansteuern eines Drehstrommotors M. Derartige Antriebsregelungen sind an sich bekannt und werden daher hier nicht näher beschrieben. Die Wechselwirkung zwischen der Antriebsregelung und dem Antriebsmotor M sind durch den mit "Stell-/Messgrößen" beschrifteten Doppelpfeil angedeutet. Dies bedeutet, dass die Antriebsregelung den Antriebsmotor M durch entsprechende Stellgrößen in seiner Zugkraft und Drehfrequenz einstellt, z. B. indem Halbleiterschalter des Wechselrichters entsprechend angesteuert werden.

Umgekehrt werden der Antriebsregelung entsprechende Messgrößen insbesondere über die fließenden elektrischen Motorströme, die Gleichspannung am Wechselrichter und die Drehzahl geliefert, aus denen die Antriebsregelung die tatsächlich wirkende Zugkraft (Ist-Zugkraft) und die Geschwindigkeit des Fahrzeugs ermitteln kann. Diese beiden Größen werden der Geschwindigkeitsregelung der Fahrzeug-Steuerung übermittelt.

In der bereits beschriebenen Weise stellt die Fahrzeug-Steuerung außerdem die mechanische Bremse ein, wobei sie einen von ihr definierten Sollwert der Bremskraft an das Bremssystem übermittelt.

Die in dem gestrichelten Kasten unten in Figur 3 vorhandenen Komponenten können in dem Schienenfahrzeug mehrfach vorhanden sein. Dementsprechend kann die Fahrzeug-Steuerung mehrere Ausgänge und Eingänge aufweisen, über die die Soll-Zugkraft, die Ist-Zugkraft, die Geschwindigkeit und der Sollwert der jeweiligen mechanischen Bremse übermittelt wird.

Außerdem ist an die Fahrzeug-Steuerung in dem Ausführungsbeispiel ein Display angeschlossen, über das der Testverlauf und die Ergebnisse des Tests dargestellt werden können.

Der Ablauf wird vorzugsweise mit einer Ablaufsteuerung realisiert, die sequenziell die einzelnen Testschritte steuert.

### Beispiel:

- 1.: Soll-Geschwindigkeit vorgeben
- 2.: Warten, bis Ist-Geschwindigkeit Soll-Geschwindigkeit erreicht hat
- 3.: Speichern des Zugkraftistwertes
- 4.: Ansteuerung der mechanischen Bremse
- 5.: Minimale Zeit warten, bis Ist-Geschwindigkeit Soll-Geschwindigkeit erreicht hat (Geschwindigkeitsregler in stabilem Beharrungszustand ist)
- 6.: Abspeichern der jetzt zusätzlich erforderlichen Zugkraft, die benötigt wird, um die Geschwindigkeit zu halten.
- 7.: Mechanische Bremse lösen
- 8.: Schritte 4...7 für andere mechanische Bremsen wiederholen
- 9.: Auswerten der Resultate

## Patentansprüche

1. Verfahren zum Prüfen der Wirksamkeit einer mechanischen Bremse eines Schienenfahrzeugs, wobei die mechanische Bremse während einer Fahrt des Schienenfahrzeugs mit konstanter Geschwindigkeit betätigt wird, sodass eine automatische Geschwindigkeitsregelung (C) des Schienenfahrzeugs die Bremskraft der mechanischen Bremse durch eine erhöhte Antriebskraft oder Antriebsleistung ausgleicht, um die Geschwindigkeit weiterhin konstant zu halten, und wobei aus der erhöhten Antriebskraft oder Antriebsleistung die Wirksamkeit der mechanischen Bremse ermittelt wird.

2. Schienenfahrzeug mit einer automatischen Geschwindigkeitsregelung(C) und mit einer Prüfeinrichtung (C) zum Prüfen der Wirksamkeit einer mechanischen Bremse des Schienenfahrzeugs, wobei die Prüfeinrichtung (C) ausgestaltet ist, während einer Fahrt des Schienenfahrzeugs mit konstanter Geschwindigkeit, wenn die mechanische Bremse betätigt wird, eine von der automatischen Geschwindigkeitsregelung (C) des Schienenfahrzeugs bewirkte erhöhte Antriebskraft oder Antriebsleistung festzustellen und aus der erhöhten Antriebskraft oder Antriebsleistung die Wirksamkeit der mechanischen Bremse zu ermitteln.

## Claims

1. Method for testing the effectiveness of a mechanical brake of a rail vehicle, whereby the mechanical brake is actuated while the rail vehicle is travelling at constant speed, so that an automatic speed regulation (C) of the rail vehicle compensates the braking power of the mechanical brake by means of an increased driving force or driving power, in order to continue to maintain the speed constant, and whereby the effectiveness of the mechanical brake is determined using the increased driving force or driving power.

2. Rail vehicle with an automatic speed regulation (C) and with a testing unit (C) for testing the effectiveness of a mechanical brake of the rail vehicle, whereby the testing unit (C) is designed to determine, while the rail vehicle is travelling at constant speed, when the mechanical brake is actuated, an increased driving force or driving power brought about by the automatic speed regulation (C) of the rail vehicle, and to find the effectiveness of the mechanical brake based on the increased driving force or driving power.

## Revendications

1. Procédé de vérification de l'efficacité d'un frein mécanique d'un véhicule sur rail, le frein mécanique étant actionné pendant un déplacement du véhicule sur rail à une vitesse constante de sorte qu'une régulation automatique de la vitesse (C) du véhicule sur rail compense la force de freinage du frein mécanique par une force de propulsion ou puissance de propulsion accrue afin de maintenir constante en outre la vitesse et à partir de la force de propulsion ou puissance de propulsion accrue étant déterminée l'efficacité du frein mécanique.

2. Véhicule sur rail avec une régulation automatique de la vitesse (C) et avec un dispositif de vérification (C) pour la vérification de l'efficacité d'un frein mécanique du véhicule sur rail, le dispositif de vérification (C) étant configuré de sorte à constater pendant un déplacement du véhicule sur rail à une vitesse constante lorsque le frein mécanique est actionné, une force de propulsion ou puissance de propulsion accrue provoquée par la régulation automatique de la vitesse (C) du véhicule sur rail et à déterminer à partir de la force de propulsion ou puissance de propulsion accrue l'efficacité du frein mécanique.
